# EUROPEAN PATENT APPLICATION

(11) **EP 2 363 545 A2**
(43) Date of publication of application: **07.09.2011**
(21) Application number: 09425515.5
(22) Date of filing: 18.12.2009
(51) Int. Cl.: E04B 1/80, B32B 5/08, B32B 21/10, E04B 1/78

(54) **Ecological panel for energy saving**

(30) Priority: 18.12.2008 IT BZ20080054
(71) Applicant: Ugolini, Paolo, 37010 Albare' di Costermano (VR) (IT)
(72) Inventor: Ugolini, Paolo, 37010 Albare' di Costermano (VR) (IT)

(57) **Abstract**

Ecological directional plated wood panel coupled, through a fixing system, with a fabric of pure cotton interwoven with copper wires, conceived both for several kind of structural and industrial applications, in order to solve the problem of energy consumption, costs of job, materials recycling and environmental wealth.

Fields of application: building, prefabricated constructions, nautical, aeronautical, motor, flooring of several kind, furnishing.

## Description

The invention regards an ecological wood panel combined with a fabric of pure cotton interwoven with copper wires, conceived both for several kind of structural and industrial applications, in order to solve the problem of the energy consumption, the costs of job, material recycling and environmental wealth.

In the buildings the problem to be solved is to insulate those parts exposed more to the direct action of the thermal changes due to the outside climatic conditions. Therefore it turns out indispensable to find some solutions to insulate such parts, to ensure an adequate thermal insulation inside the buildings and at the same time to knock down the high energy consumptions.

At present, in order to reach a degree of insulation adequate to the current demands, and a saving regards energy cost, several kind of insulating panels stood on the outside walls and on the coverings are used.

Such panels, notice in the technique, are seldom able to perform simultaneously the adequate thermal insulation and sound absorbent function, besides that of energy saving. Moreover this insulation involves the lack of wall's perspiration.

Therefore it has become a strong need to have the possibility of having an insulating, thermal, ecological, recyclable panel that is able to satisfy and ensure a thermal isolation and above all, to simultaneously ensure a high energy saving, and it is a solution of the cost problems and construction times for the realization of building structures or other constructive typologies.

For instance if we consider the realization of a traditional partition wall of about 15 square meter of surface we would have a cost equal to € 1.100,00 (cost material, labor and finish) and a realization time of 3 days, besides the considerable final structural weight. With the use of this panel instead, besides halving the costs, we will have a realization time of a single day (sandwich with central framework erection), while the weight will be only 6 kg/square meter ; without losing anyway its mechanical rigidity.

Therefore the invention purpose is to arrange for the realization of an ecological and energy saving panel, which finds some solutions to the problems of the well known technique.

The main feature of this invention is to cause a thermo regulator/ accumulator effect, due to the presence of copper wires interwoven with pure cotton fabric, which are combined with the directional plated wood panel, as claimed in claim 1.

The thermo regulator /accumulator effect is based on the principle that the heat produced by various sources (radiators, convectors, floor heating, stoves and other) is picked up and stored by the wood's properties (accumulator) and propagated through the woven copper wires in the pure cotton fabric all over the surface of the panel itself, making it so become a radiant panel.

The thermo regulator/accumulator effect produced by the panel causes that the heat-sources of several kind, or the cooling-sources ( different conditioning systems ), speed up the environment temperature condition, reducing the number of system ignitions.

Example. With traditional heating: 18/20 ignitions of the system in the 24 hours. Duration working, between ignition and switching off, of about 15/20 minutes for cycle. Heating system using this panel, according to this invention: 8/10 ignitions of the system in the 24 hours. Duration working, between ignition and switching off, of about 8/10 minutes for cycle. So we will have a smaller energy consumption, smaller atmospheric pollution, smaller wear and tear of the system, lower costs.

The copper choice is principally bases on his high thermal conductibility property further on his well known antiseptic characteristics , which perform a marked antibacterial and anti mould function, as the pure copper prevents the formation of microorganisms and mould strongly.

So the use of this panel, purpose of the invention, offers a series of other advantages besides those already exposed.

Following experimentations make in extreme conditions both of temperature and damp, the product places to answer of all the today's market requirements as regards the sector of bio-building and bio-construction, being a recyclable product.

For the panel realization, using vanguard technologies, they use a minimum quantity of synthetic adhesives, as it exploits at best the property of the wood itself, being rich made of resin.

Furthermore this invention ensures a simple installation, in the context of a rational constructive solution, with limited cost.

This panel has various thicknesses according to the use which wants to do himself. It will have a bigger thickness for the floorings (22/25 mm), as in new building structures, with floor heating and not, with the elimination of the traditional "base" the stratification thickness will be reduced , removing so weight for square meter of cement/polystyrene, keeping the same mechanical rigidity and capacity, but with smaller ceiling weight ( panel 's weight of about kg 7 for square meter).

One will have, besides the smallest weight of the structural mass, also the advantage to make the building more light and rigid mechanically, speeding up the heating of the floor and reaching so the wished room temperature with swiftness, saving energy.

In restoration situations the thickness of the panel is smaller because, not removing the base, the panel will be stood on besides ensuring his function of energy saving also because it has the property to be sound absorbent to the trampling, as it is treated with a natural fiber film.

The panel , purpose of the invention, is especially suitable in condensation boiler presence.

Claims show better and especially favorable realization forms in order to exalt the coupling features to form an energy saving panel, according to the invention.

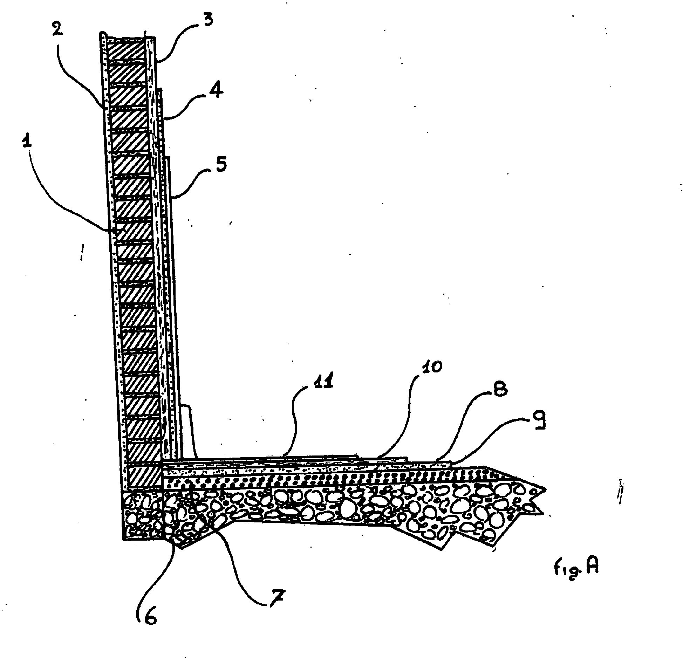

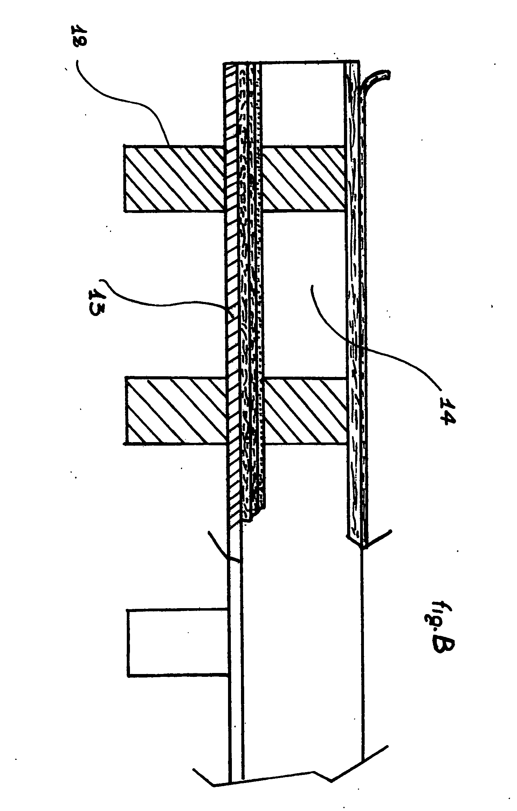

The features and the advantages of the invention are clear from the following descriptions ,provided with the figures' help show in the enclosed table in which:
- In the figure A a sight in axonometric section of a internal masonry wall and a ceiling section is shown, on which this ecological panel to energy saving is applied, according to this invention. In particular in the figure A a brick wall (detail 1) outside plastered (2) is shown, while the panel, in compliance with this invention, composed by directional plated wood (3) coupled with pure cotton fabric interwoven with copper wires (4) with a fixing system (5) is fixed inside, that has also the function of making the panel finished and ready for the final painting. Obviously, after the layer, one will only have to proceed to the only stuccoing between a panel and the other.

In the example, the wall panel , in compliance with this invention, has a total thickness of about 12 mm, in which 10 directional plated (3) wood panel mm, 1 of pure cotton fabric interwoven with copper wires mm (4) and 1/1,5 of fixing system mm (5) and a weight of about 6 kg for square meter.

The panel thickness can change, from 6 to 30 mm, according to the necessities.

In the figure A a ceiling made of cement (6) having only a first layer of base (7) to contain the electric wires is shown. Beyond a layer of thermo acoustical polystyrene expanded sintered (10) containing the pipes of polyethylene (9) for the floor heating system is stood. On the upper part of this layer (10) the ecological panel to energy saving (8), according to this invention, with thickness of 22/25 mm , weight of about 7 kg for square meter and bored is stood. The floor (11) is then stood above, as from claim n°7.
- In the figure B a sight in axonometric section of an under- roofing with truss of wood (12) is shown, on which the isolating covering, according to this invention, is visible.

The ecological panel to energy saving (13) is put and fixed directly between the beams (12) and the channel of ventilation of the under-roofing(14), placed with the side covered by the pure interwoven cotton fabric with turned copper wires towards the internal building side.

The panel can have variable thicknesses, according to the sector of use, from 6 to 30 mm.

Features and characteristic qualities of the panel cause him to place for uses also different from the building sector, such as the nautical, aeronautical, motor one and furnishings generally.

As it can be appreciated from what described, the panel, according to this invention, allows to satisfy the demands and exceed the inconveniences about which we said in the introductory part of this description with reference to the well known technique.

To the ecological panel to energy saving it will obviously be possible to produce modifications or improvements dictated by contingent or special motivations, without for this going out of the ambit of the invention as claimed below.

## Claims

1. Ecological directional plated wood panel coupled with a pure cotton fabric interwoven with copper wires.

2. Panel, according to claim 1, in which instead of the layer of pure cotton fabric interwoven with copper wires, is claimed the use of copper wires interwoven together without any additional fabric's help.

3. Panel, according to claim 1, in which is claimed the coupling with natural or synthetics fibers interwoven with copper wires.

4. Panel in which is claimed the coupling between multilayers wood panel or similar or composites and fabric, according to claims 1, 2 and 3.

5. Panel, according to claims 1, 2, 3 , 4 ,6 with holes passing through it in order to help the propagation of the heat coming from a floor heating system, and/or other uses.

6. Panel, according from claim 1 to 5, with variable thicknesses, from 6 to 30 mm, according to its use.

7. Panel, according to claims from 1 to 6, on which a stony flooring, parquet, moquette, grit, linoleum, methacrylate, agglomerates or composites is laid.

8. Panel, according to claims from 1 to 7, with 2 or more copper wires coupled with natural fibers fabric, synthetic fibers or similar.

9. Panel, according to any one of the preceding claims, with naked surface fixed to the wall.

10. Panel, according to any one of the preceding claims, with naked surface laid on the slab or on any possible floor heating system.
